# EUROPEAN PATENT APPLICATION

(11) **EP 2 573 667 A2**
(43) Date of publication of application: **27.03.2013**
(21) Application number: 12184634.9
(22) Date of filing: 17.09.2012
(51) Int. Cl.: G06F 3/0488

(54) **Overlays for touch sensitive screens to simulate buttons or other visually or tactually discernible areas**

(30) Priority: 26.09.2011 US 201161539326 P; 12.07.2012 US 201213547534
(71) Applicant: Wacom Co., Ltd., Saitama, 349-1148 (JP)
(72) Inventor: Grey, Shawn, Tokyo, 160-6131 (JP)
(74) Representative: Appelt, Christian W.

(57) **Abstract**

Overlays for use with touch sensitive display devices are provided, which are configured to simulate visually and/or touch discernible areas with the look and feel of actual buttons or activators. The overlay may be provided over an otherwise smooth surface of a display device to augment its look and/or feel, to enhance its user operability as a touch sensitive display device. The overlay includes one, a plurality, or a pattern of visually and/or touch discernible area(s), and is overlaid on the display device such that the discernible areas are registered with active regions (touch sensitive regions) of the display device. Thus, a user can readily discern the active regions of the display device based on the visually or touch discernible areas overlaid thereon. When an area is touched, an active region corresponding to the area is activated, and an activation signal is generated to trigger execution of a corresponding routine.

## Description

### BACKGROUND

### Technical Field

Embodiments of the present invention relate to overlays for use with touch sensitive display devices for simulating visually and/or touch discernible areas and to methods for making and using the same.

Embodiments of the present invention relate to overlays for use with tough sensitive display devices, where the overlays include one visually and/or touch discernible area, a plurality of visibly and/or tactually discernible areas, or a pattern of visually and/or touch discernible areas, and to methods for making and using the same.

### Description of the Related Art

Touch sensitive display devices are rapidly becoming the standard for many types of electronic devices. A touch sensitive display device generally comprises a display screen and a transparent or translucent touch panel disposed on the display screen. One problem with these devices is that the surface of the devices is generally smooth with no discernible differences between different portions of the surface. If the surface of a display device is associated with a system executing an interactive software program, such as a game program, then active regions of the touch panel may be made visually different on the display screen (which is visible through the touch panel), but the surface of the display device has the same smoothness and the same feel.

### SUMMARY

In accordance with one aspect of the present invention, an overlay is provided that augments a look and/or feel of the surface of a touch sensitive display device or a portion or a plurality of portions of the display device.

Embodiments of the present invention provide overlays for touch sensitive display devices, where the overlay includes one visually and/or touch discernible area, a plurality of visually and/or touch discernible areas, or a pattern of visually and/or touch discernible areas.

Embodiments of the present invention provide a touch sensitive display device including an overlay overlaying a portion, portions, or an entire surface of the display device, where the overlay(s) include(s) one visually and/or touch discernible area, a plurality of visually and/or touch discernible areas, or a pattern of visually and/or touch discernible areas, where the area(s) are in correspondence with or registration with one, a plurality, or a pattern of active region(s) of the display device.

Embodiments of the present invention provide a system including a digital processing unit, a touch sensitive display device in communication with the digital processing unit, where the display device is capable of displaying a computer generated image on the display device having one, a plurality, or a pattern of active region(s). The system also includes an overlay overlaying a portion, portions, or an entire surface of the display device, where the overlay(s) include(s) one visually and/or touch discernible area, a plurality of visually and/or touch discernible areas, or a pattern of visually and/or touch discernible areas, where the area(s) are in correspondence with or registration with one, a plurality, or a pattern of active region(s) of the display device.

Embodiments of the present invention provide methods for making an overlay for a touch sensitive display device, where the overlay includes one visually and/or touch discernible area, a plurality of visually and/or touch discernible areas, or a pattern of visually and/or touch discernible areas and is fabricated from a clear, transparent or translucent material. The fabrication steps may include compression forming, blow molding, molding followed by etching, molding followed by a pattern disposition, molding followed by a pattern disposition and etching, or any other method for fabricating a rigid, semi-rigid, or flexible material.

Embodiments of the present invention provide methods for operating a touch sensitive display device, where the display device includes an overlay overlaying a portion, portions, or an entire surface of the display device, where the overlay(s) include(s) one visually and/or touch discernible area, a plurality of visually and/or touch discernible areas, or a pattern of visually and/or touch discernible areas, where the area(s) are in correspondence with or registration with one, a plurality, or a pattern of active region(s) of the display device. The methods include generating an image on the display device, where the image includes one, a plurality, or a pattern of active region(s). The methods also include detecting a touch on an area of the overlay corresponding to an active region of the display device, and generating a signal indicating that the active region was activated.

Embodiments of the present invention provide methods for operating a system including a digital processing unit and a touch sensitive display device in communication with the digital processing unit, where the display device is capable of displaying a computer generated image on the display device having one, a plurality, or a pattern of active region(s). The system also includes an overlay overlaying a portion, portions, or an entire surface of the display device, where the overlay(s) include(s) one visually and/or touch discernible area, a plurality of visually and/or touch discernible areas, or a pattern of visually and/or touch discernible areas, where the area(s) are in correspondence with or registration with one, a plurality, or a pattern of active region(s) of the display device. The methods include executing a software program in the digital processing unit, which generates an image on the display device, where the image includes one, a plurality, or a pattern of active region(s). The methods also include detecting a touch on an area of the overlay corresponding to an active region of the display device, and generating a signal indicating that the active region was activated. The methods may further include executing a program step or routine corresponding to the signal generated to indicate that the active region was activated. The methods may also include generating a responsive image on the display device, the responsive image corresponding to the signal generated to indicate that the active region was activated.

Embodiments of the present invention provide a multi-touch detection system having a display device, on which a multi-touch manipulation is detectable. The multi-touch detection system includes a display device, which includes a display screen and a multi-touch detection sensor having transparent property and overlaid on the display screen. The multi-touch detection system further includes an overlay having button configurations and being overlaid on the multi-touch detection sensor, where the button configurations are in correspondence with or registration with at least some of the active regions of the multi-touch detection sensor. The multi-touch detection system further includes a touch detection determination device, which is configured to determine a touch detected in the active regions in correspondence with or registration with the button configurations as an acceptable touch, while determining a touch detected in other active regions that are not in correspondence with or registration with the button configurations as an unacceptable touch.

### BRIEF DESCRIPTION OF THE SEVERAL VIEWS OF THE DRAWINGS

The invention can be better understood with reference to the following detailed description together with the appended illustrative drawings in which like elements are numbered the same:

Figure 1 depicts an embodiment of a system of this invention including a display screen, a touch panel, an overlay, and associated control components.

Figure 2A depicts an embodiment of a system of this invention including a display screen displaying a pattern of active regions, a touch panel having the active regions and overlapping the display screen, and an overlay having a pattern of visually and/or touch discernible areas overlaying the active regions of the touch panel, where the active regions and the areas are arranged in rows.

Figure 2B depicts another embodiment of a system of this invention including a display screen displaying four patterns of active regions, a touch panel having the active regions and overlapping the display screen, and four overlays each having a pattern of visually and/or touch discernible areas corresponding to the active regions of the touch panel, where each of the four patterns is a row.

Figure 2C depicts an embodiment of a system of this invention including a display screen displaying three different patterns of active regions, a touch panel having the active regions and overlapping the display screen, and three overlays each having a different pattern of visually and/or touch discernible areas corresponding to the active regions of the touch panel, where the three patterns are different.

Figure 3A depicts an embodiment of an overlay including a plurality of raised square areas.

Figure 3B depicts an embodiment of an overlay including a plurality of raised circular areas.

Figure 3C depicts an embodiment of an overlay including a plurality of recessed square areas.

Figure 3D depicts an embodiment of an overlay including a plurality of square areas having a compound configuration including a raised outline portion having an interior recessed portion.

Figures 4A and 4B depict an embodiment of a system of this invention including an overlay including a plurality of raised square areas made of a compressible material, in an uncompressed state and in a compressed state, respectively.

Figures 5A and 5B depict another embodiment of a system of this invention including an overlay including a raised area including a flexible top material and a hollow interior, in a non-deflected state and in a deflected state, respectively.

Figure 6 depicts another embodiment of a display system of this invention.

Figures 7A-7C are flow charts depicting various exemplary processes for use in connection with an overlay of the present invention.

### DETAILED DESCRIPTION

According to exemplary embodiments of the present invention, a transparent overlay can be constructed out of a clear material, where the overlay includes one or a plurality of raised area(s), recessed area(s), or mixtures or combinations thereof, where the raised or recessed areas have the look and feel of buttons or activators. The overlay is designed to overlay a portion or the entire surface of a touch sensitive display device associated with a user interface of a computer, a gaming console, a slot machine, or other systems including a digital processing unit capable of driving or interacting with a touch sensitive display device. The raised and/or recessed areas of the overlay are configured into a pattern that matches a pattern of active regions displayed on the touch sensitive display device, so that when a user touches a given raised or recessed area, the underlying active region of the touch sensitive display device is activated, which in turn causes the user interface and the system to which it is coupled to execute a command protocol associated with the activated region. For example, when the user interacts with these raised or recessed areas, the system coupled to the display device may change one or more display attributes of a portion or the entire surface of the display device, including the portion associated with the activated regions. The system may be a haptic feedback system as is well known in the art.

The distinct areas of the overlay of the touch sensitive display device are visually discernible and/or tactually discernible from the surrounding portions of the overlay. For example, the discernible areas may be a recessed area, raised area, textured area (e.g., ridges, dots, lines, striations, hatches, hashes, etc.), any other area having other types of structures that have a different look and/or feel compared to surrounding portions of the overlay, or a combination or a mixture thereof. The discernible areas may also be constructed so that they are capable of a small deflection when touched. The deflection may be the result of forming the discernible areas with a compressible material, or with a flexible material over a hollow interior chamber.

These overlays may be ideally suited for gaming devices, where each discernible area corresponds to an active region of a touch sensitive display device, and where an active region means a region that when touched causes the gaming device connected to the display device to change one or more visual attributes of the display device. The active regions of the display device and the corresponding discernible areas of the overlay may be of any desired shape such as a square, a rectangular, a triangular, a quadrilateral, a polygonal, a polyhedron, a circle, an ellipse, other regular closed geometrical shapes, irregular closed geometrical forms, or mixtures or combinations thereof.

Embodiments of the present invention relate to overlays. Other embodiments of the present invention relate to a touch sensitive display device including one or more overlay(s). Further embodiments of the present invention relate to a system including a digital processing unit and a touch sensitive display device, where the display device includes one or more overlay(s). Still further embodiments of the present invention relate to methods for making an overlay, methods for operating a touch sensitive display device including one or more overlay(s), and methods for operating a system including a digital processing unit and a touch sensitive display device, where the display device includes one or more overlay(s). Further embodiments of the present invention relate to a multi-touch detection system having a display device including one or more overlay(s).

### Suitable Components and Materials for Use in the Invention

Suitable display devices or screens include, without limitation, liquid crystal displays (LCD), plasma displays, light emitting diode (LED) displays, organic light emitting diode (OLED) displays, or other film type displays.

Suitable touch panels include, without limitation, inductive touch panels, capacitive touch panels, resistive coupling type touch panels, or any other touch sensitive panels. Exemplary examples include, without limitation, touch panels manufactured by Sintek, Cando, Wintek, Dai Nippon Printing Co., Ltd., TPK Holding Co., Ltd, Mas-Touch, Wacom Co., Ltd., Perceptive Pixel, 3M Touch Systems, and Gunze.

Suitable digital processing units for use in a system include, without limitation, digital processing units manufactured by Aeroflex, Advanced Micro Devices, Inc., aJile Systems Inc., Analog Devices, Atmel Corp, Broadcom Corporation, Centaur Technology, EM Microelectronic-Marin SA, Epson, Freescale Semiconductor, Inc., Fujitsu, Holtek Semiconductor Inc., Infineon, Integrated Device Technology, Inc., Intel Corporation, Intersil, Kawasaki LSI, LSI Corporation, Maxim Integrated Products, MicroChip, MIPS Technologies, Inc., NEC, NVIDIA Corp., NXP, Oki Semiconductor, Panasonic Industrial Components, PMC-Sierra Inc., Realtek Semiconductor Corp., Renesas Technology Corp, Silicon Laboratories, STMicroelectronics, Texas Instruments Inc., Tilera, Toshiba, Tvia Inc., Winbond Electronics Corp., Zarlink Semiconductor, ZF Micro Solutions Inc., and Zilog.

Suitable clear materials for use in forming overlays include, without limitation, glass (any type), sapphire, diamond, ruby, polycarbonates, polyolefins, polyesters such as MYLAR®, other transparent or translucent films, or mixtures and combinations thereof.

### Detailed Description in Reference to the Drawings

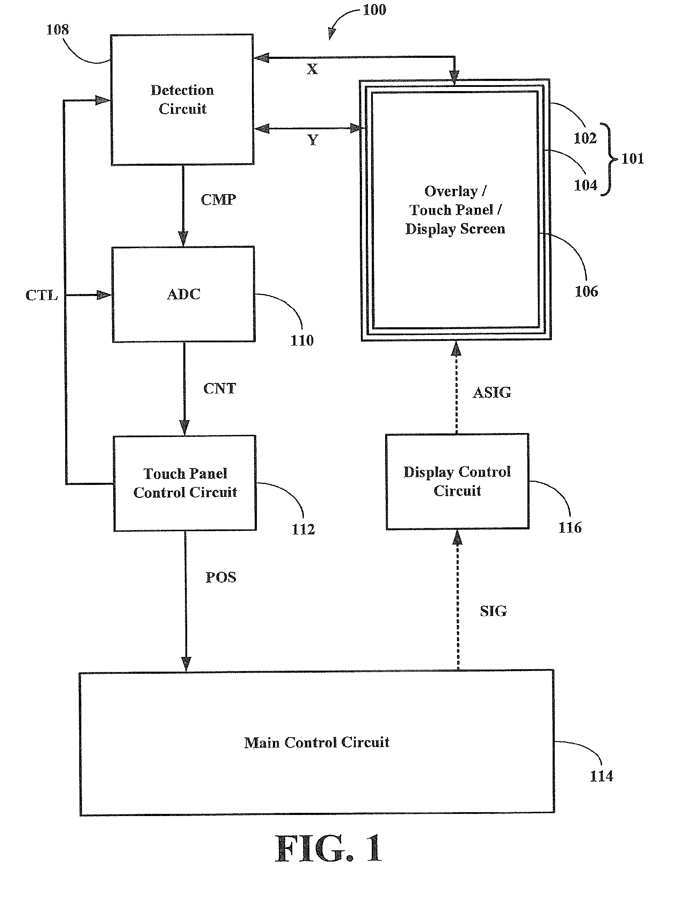

Referring now to Figure 1, a structural diagram of an on-screen input image display system according to an embodiment of this invention, generally 100, is shown. As illustrated in Figure 1, the system 100 includes a display device 101, which comprises a display screen 102 and a touch panel 104 attached to the display screen 102 in an overlapping manner so as to, together, constitute the on-screen input image display device 101. In some embodiments, the display screen 102 is attached on top of the touch panel 104, while in other embodiments, the touch panel 104 is attached on top of the display screen 102, in which case the touch panel 104 is formed of transparent or translucent material such that a user can view the display screen 102 through the touch panel 104. In Figure 1, the touch panel 104 is illustrated to be attached on top of the display screen 102.

The display screen 102 is a liquid crystal display panel, an organic light emitting diode panel, or the like. The touch panel 104 is a capacitive coupling type touch panel, an inductive coupling type touch panel, a resistive coupling type touch panel, or any other touch sensitive panel. In the illustrated embodiment, the touch panel 104 is a capacitive coupling type touch panel.

The display device 101 (or the touch panel 104 of the display device 101 in the illustrated embodiment) has an overlay 106 associated therewith in either a detachable or non-detachable manner. The overlay 106 is shown here as being generally co-extensive with the display device 101, but the overlay 106 may be associated with only a portion of the display device 101 or the overlay 106 may comprise a plurality of discreet suboverlays associated with different portions of the display device 101. When a user's finger or the like contacts (touches) the overlay 106 or the touch panel 104 (where no overlay is present), then a detection circuit 108 detects a change in capacitance at the touched site. The detection circuit 108 outputs a detection output signal, CMP, based on a result of the detection of the change in capacitance, to an analog-to-digital converter (ADC) 110, which outputs an analog-to-digital converted signal, CNT. A touch panel control circuit 112 receives the analog-to-digital converted signal, CNT, and determines coordinates (X coordinate and Y coordinate) of the touched site or point on the display device 101. The touch panel control circuit 112 outputs determined touch coordinate data, POS, to a main control circuit (i.e., a system control circuit made up of a microprocessor, digital processing unit (DPU), central processing unit (CPU), or the like) 114, which carries out overall control of the on-screen input image display device 100.

The main control circuit 114 judges occurrence of a user's touch and its coordinates from the touch coordinate data POS, and supplies a display signal, SIG, corresponding to the judgment to a display control circuit 116. The display control circuit 116 then supplies a display control signal, ASIG, to the display screen 102, to thereby reflect the touch coordinate data, POS, and/or a result thereof on the display screen 102. The detection circuit 108 and the ADC 110 are controlled by the touch panel control circuit 112 via a control signal, CTL. For additional disclosure concerning touch panels, a reference may be made to United States Patent Application Publication No. 2009/0102813A1, which is incorporated herein by reference.

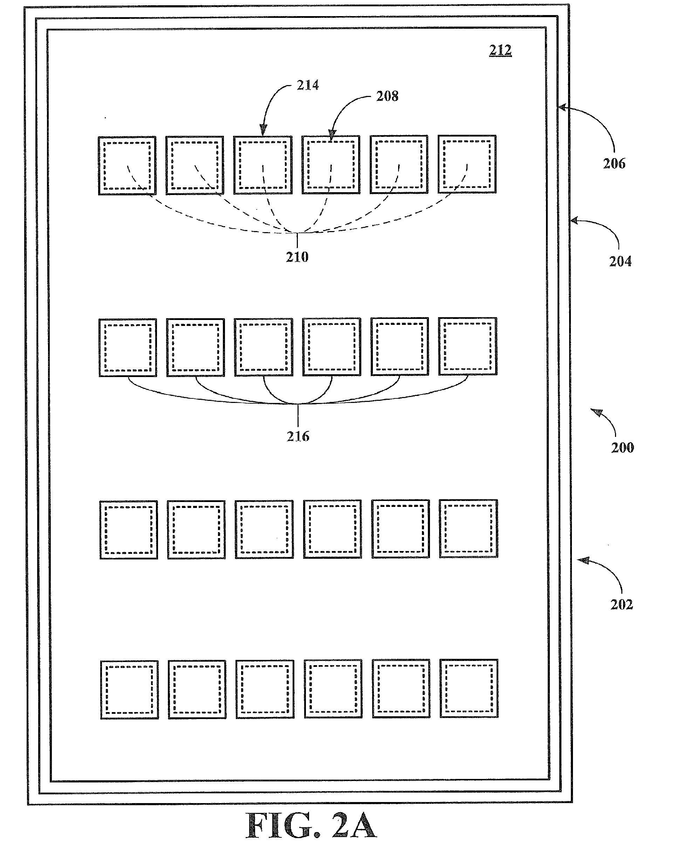

Referring now to Figure 2A, an embodiment of a display system of this invention, generally 200, is shown to include a touch sensitive display device 202 having a display screen 204 and a touch panel 206 disposed on the screen 204. The display screen 204 is shown here displaying a screen pattern 208 of active regions 210. In the illustrated embodiment, the screen pattern 208 comprises four rows of six square active regions 210, which are outlined in broken lines. The system 200 also includes an overlay 212 including an overlay pattern 214 of visually and/or touch discernible areas 216, which are outlined in solid lines. The visually and/or touch discernible areas 216 overlay the active regions 210 and are shown here to be slightly larger than the active regions 210, but the actual size of the discernible areas 216 relative to the active regions 210 are a matter of design and aesthetic considerations. Thus, the discernible areas 216 are registered with or correspond to the active regions 210, but do not have to be coextensive. Of course, the screen pattern 208 and the overlay pattern 214 may be any pattern of geometrical shapes, regular or irregular. The display screen 204, the touch panel 206, and the overlay 212 are shown here as not being coextensive; however, the three components may certainly be coextensive.

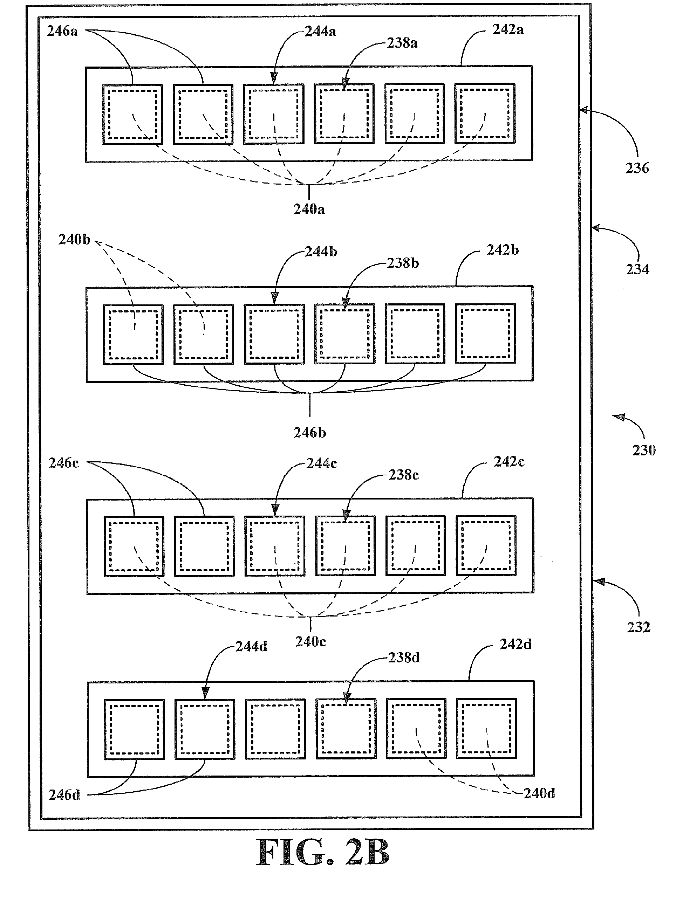

Referring now to Figure 2B, an embodiment of a display system of this invention, generally 230, is shown to include a touch sensitive display device 232 having a display screen 234 and a touch panel 236 disposed on the display screen 234. The display screen 234 is shown here displaying four identical patterns 238a-d of active regions 240a-d, which are outlined in broken lines. In the illustrated embodiment, each of the four patterns 238a-d comprises a row of six square active regions 240a-d. The system 230 also includes four overlays 242a-d including identical overlay patterns 244a-d of visually and/or touch discernible areas 246a-d, which are outlined in solid lines. The visually and/or touch discernible areas 246 overlay the active regions 240 and are shown here to be slightly larger than the active regions 240, but the actual size of the discernible areas 246 relative to the active regions 240 are a matter of design and aesthetic considerations. Regardless of relative size, the discernible areas 246 are registered with or correspond to the active regions 240. Of course, the screen patterns 238a-d may be the same or different from each other and each may be any pattern of geometrical shapes, regular or irregular. Similarly, the overlay patterns 244a-d may be the same or different from each other and each may be any pattern of geometrical shapes, regular or irregular. The display screen 234 and the touch panel 236 are shown here as not being coextensive; however, the components may certainly be coextensive.

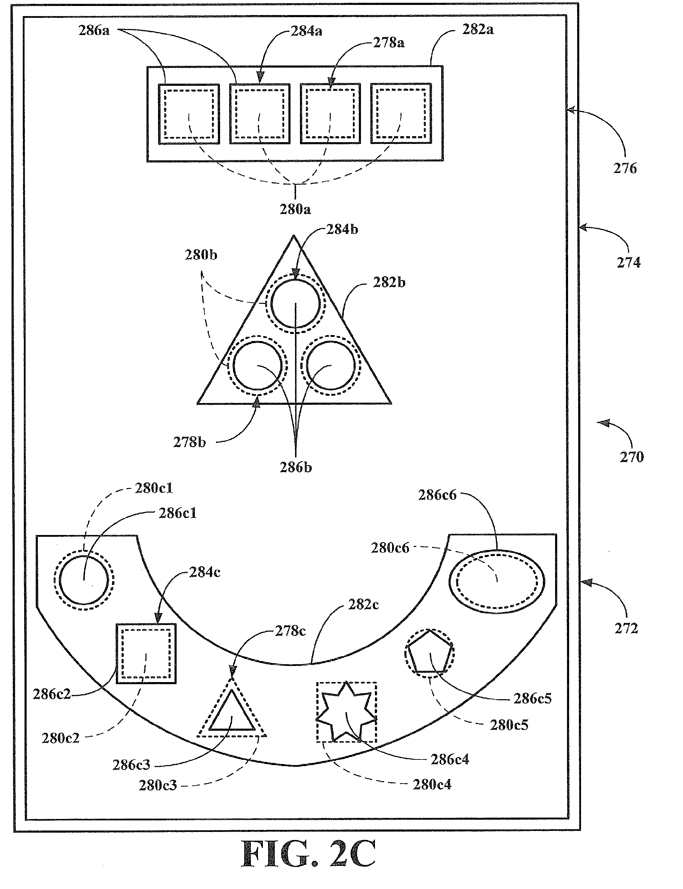

Referring now to Figure 2C, an embodiment of a display system of this invention, generally 270, is shown to include a touch sensitive display device 272 having a display screen 274 and a touch panel 276 disposed on the screen 274. The display screen 274 is shown here displaying three different screen patterns 278a-c of active regions 280a-c. In the illustrated embodiment, the first screen pattern 278a comprises a row of four square active regions 280a (outlined in broken lines); the second screen pattern 278b comprises a triangular arrangement of three circular active regions 280b (outlined in broken lines); and the third screen pattern 278c comprises an arc-shaped arrangement of six geometrically different active regions 280c1-6 (outlined in broken lines). The system 270 also includes three overlays 282a-c including three different overlay patterns 284a-c of visually and/or touch discernible areas 286a-c, which are outlined in solid lines. The visually and/or touch discernible areas 286a-c overlay the active regions 280a-c of the touch panel 276. The third overlay pattern 284c, similar to the third screen pattern 278c, is of an irregular shape resembling a smiley face or an arc shape.

In Figure 2C, some of the discernible areas 286 are shown to be slightly larger than the corresponding active regions 280 (e.g., the discernible areas 286a in the first overlay 282a, and the discernible areas 286c2 and 286c6 in the third overlay 282c), while other discernible areas 286 are show to be slightly smaller than the corresponding active regions 280 (e.g., the discernible areas 286b in the second overlay 282b, and the discernible areas 286c1, 286c3, 286c4 and 286c5 in the third overlay 282c). However, the actual size of the discernible areas 286a-c relative to the active regions 280a-c are a matter of design and aesthetic considerations and, for example, they may be coextensive. Again, regardless of relative size, the discernible areas 286a-c are registered or correspond with the active regions 280a-c, respectively. Of course, each of the screen patterns 278a-c and the overlay patterns 284a-c may be any pattern of various geometrical shapes, regular or irregular. In fact, the third screen pattern 278c includes six active regions 280c1-6 of different geometrical shapes and/or sizes, while the third overlay pattern 284c also includes six discernible areas 286c1-6 of different geometrical shapes and/or sizes. Further, while some of the discernible areas 286c are similarly shaped with the corresponding active regions 280c (e.g., the discernible areas 286c1, 286c2, 286c3 and 286c6), other discernible areas 286c are not so similarly shaped with the corresponding active regions 280c (e.g., the discernible areas 286c4 and 286c5). The display screen 274 and the touch panel 276 are shown here as not being coextensive; however, the components may certainly be coextensive.

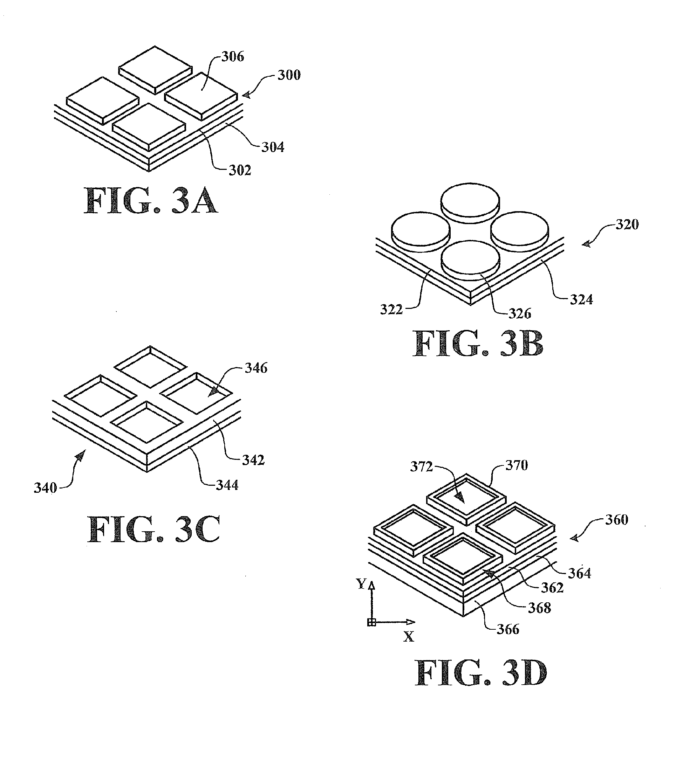

Referring now to Figure 3A, an embodiment of a touch sensitive display device of this invention, generally 300, is shown to include an overlay 302 disposed on top of a touch panel 304, which is disposed on top of a display screen such as an LCD display (not shown in this figure, see Figures 1 or 2A). The overlay 302 includes a plurality of raised square areas 306, which overlay coextensive, smaller, or larger active regions (not shown) of the touch panel 304. The plurality (four) of raised square areas 306 are arranged in a square pattern in the illustrated embodiment. While the overlay 302 may cover the entire touch panel 304, the overlay 302 may equally well comprise a plurality of separate overlays designed to each overlay a portion or portions of the touch panel 304. Also, the overlay 302 may cover only a portion or portions of the touch panel 304. Of course, the raised areas 306 may be of any polygonal shape having straight edges.

Referring now to Figure 3B, another embodiment of a touch sensitive display device of this invention, generally 320, is shown to include an overlay 322 disposed on top of a touch panel 324, which is disposed on top of a display screen such as an LCD display (not shown in this figure, see Figures 1 or 2A). The overlay 322 includes a plurality of raised circular areas 326, which overlay coextensive, smaller, or larger active regions (not shown) of the touch panel 324. The plurality (three) of raised circular areas 326 are arranged in a triangular pattern in the illustrated embodiment. While the overlay 322 may cover the entire touch panel 324, the overlay 322 may equally well comprise a plurality of separate overlays designed to each overlay a portion or portions of the touch panel 324. Also, the overlay 322 may cover only a portion or portions of the touch panel 324. Of course, the raised areas 326 may be of any shape having curved edge(s).

Referring now to Figure 3C, another embodiment of a touch sensitive display device of this invention, generally 340, is shown to include an overlay 342 disposed on top of a touch panel 344, which is disposed on top of a display screen such as an LCD display (not shown in this figure, see Figures 1 or 2A). The overlay 342 includes a plurality of recessed square areas 346, which overlay coextensive, smaller, or larger active regions (not shown) of the touch panel 344. The plurality (four) of recessed square areas 346 are arranged in a square pattern in the illustrated embodiment. While the overlay 342 may cover the entire touch panel 344, the overlay 342 may equally well comprise a plurality of separate overlays designed to each overlay a portion or portions of the touch panel 344. Also, the overlay 342 may cover only a portion or portions of the touch panel 344. Of course, the recessed areas 346 may be of any other geometrical shape including a polygonal, a polyhedron, a circle, an ellipse, and other regular closed geometrical shapes, irregular closed geometrical forms, or mixtures or combinations thereof.

Referring now to Figure 3D, a further embodiment of a touch sensitive display device of this invention, generally 360, is shown to include an overlay 362 disposed on top of a touch panel 364, which is disposed on top of a display screen 366 such as an LCD display. The overlay 362 includes a plurality of compound square areas 368, which overlay coextensive, smaller, or larger active regions (not shown) of the touch panel 364. The compound configured square areas 368 each include a raised portion 370 having an interior recessed portion 372, or a raised outline 370 of the square area 368. While the overlay 362 may cover the entire touch panel 364, the overlay 362 may equally well comprise a plurality of separate overlays designed to each overlay a portion or portions of the touch panel 364. Also, the overlay 362 may cover only a portion or portions of the touch panel 364. Of course, the raised portion (the raised outline) 370 and the recessed portion 372 may be of any other geometrical shape than illustrated, including any a polygonal, a polyhedron, a circle, an ellipse, and other regular closed geometrical shapes, irregular closed geometrical forms, or mixtures or combinations thereof. Further, the shape/size of the raised portion (the raised outline) 370 and the shape/size of the recessed portion 372 may be the same as, similar to, or different from each other, which is a matter of design and aesthetic considerations.

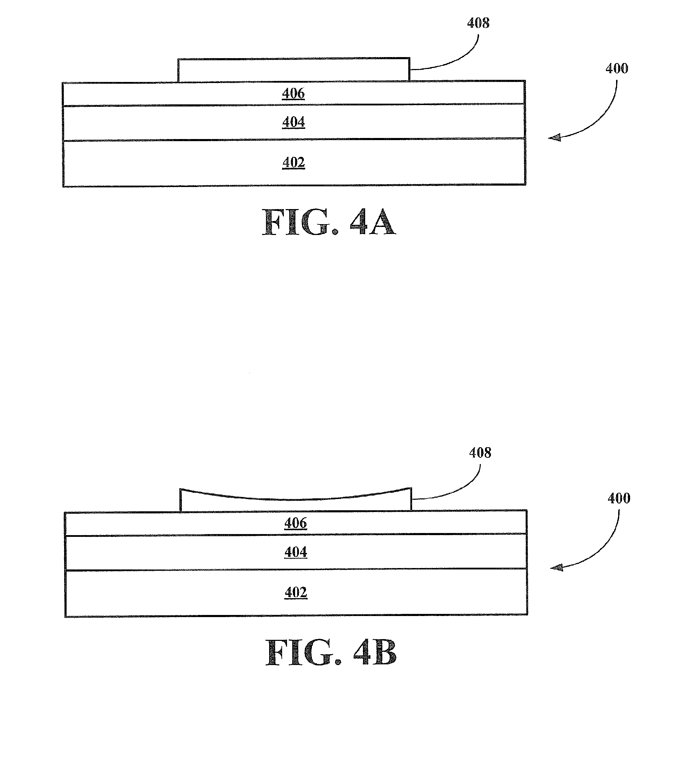

Referring now to Figures 4A and 4B, another embodiment of a touch sensitive display device of this invention, generally 400, is shown to include a display screen 402 and a touch panel 404 disposed thereon and an overlay 406 disposed on the touch panel 404. The overlay 406 includes a visually and/or touch discernible area 408. The discernible area 408 is made of a resilient material (e.g., polyolefins and polyesters), so that when touched by a user, the discernible area 408 compresses as shown in Figure 4B, and once pressure is removed, returns to its original shape shown in Figure 4A. As in all of the previous embodiments, the discernible area 408 may be of any geometric shape/size and is designed to be registered with or correspond to an active region of the touch panel 404.

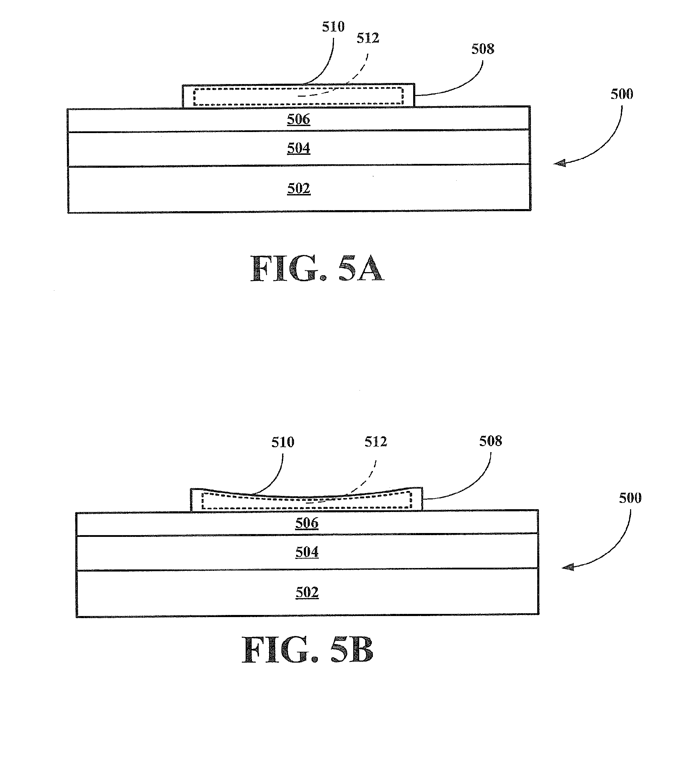

Referring now to Figures 5A and 5B, another embodiment of a touch sensitive display device of this invention, generally 500, is shown to include a display screen 502 and a touch panel 504 disposed thereon and an overlay 506 disposed on the touch panel 504. The overlay 506 includes a visually and/or touch discernible area 508. The discernible area 508 comprises a flexible top member 510 and a hollow interior (chamber) 512 so that when touched by a user, the flexible top member 510 deflects downward, compressing the hollow interior 512 as shown in Figure 5B. Once pressure is removed, the flexible top member 510 returns to its original shape as shown in Figure 5A. As in all of the previous embodiments, the discernible area 508 may be of any geometric shape/size and is designed to be registered with or correspond to an active region of the touch panel 504.

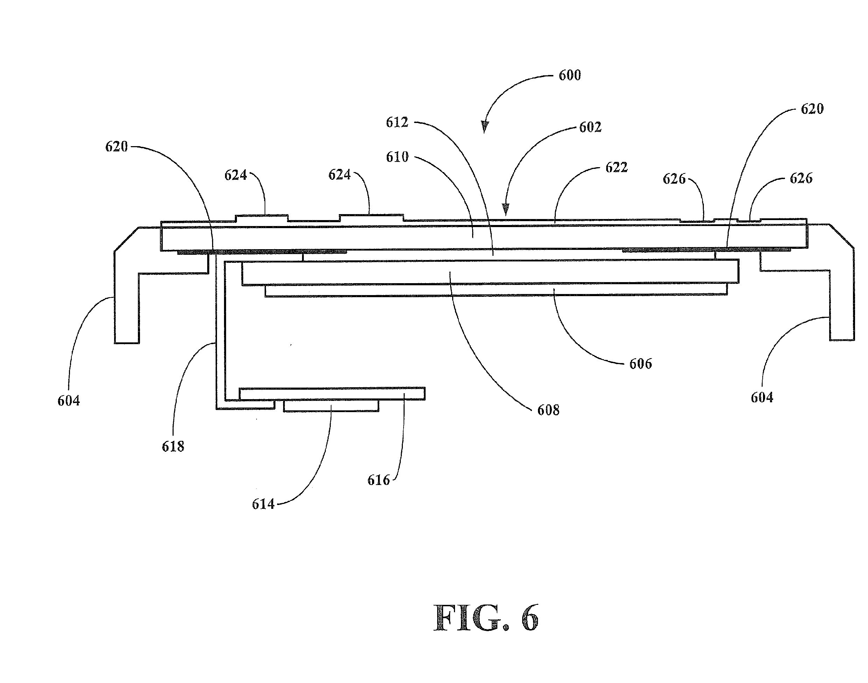

Referring now to Figure 6, a cross-sectional view of one embodiment of an on-screen input image display system of this invention, generally 600, is shown to include a stack assembly 602. The stack assembly 602 includes an upper bezel 604. The stack assembly 602 also includes an optional optical film or layer 606, a touch panel sensor glass film or layer 608, and a cover glass film or layer 610 bonded to the sensor glass layer 608 by a bonding film or layer 612. The stack assembly 602 also includes a controller 614 mounted on a mount 616, where the controller 614 is in electrical communication with the sensor glass layer 608 via an electrical conduit, wire, or cable 618. The stack assembly 602 may also include an ink mask 620.

The apparatus 600 also includes an overlay 622. The overlay 622 includes raised regions 624 and recessed regions 626, which are either visually discernible and/or touch discernible areas on the overlay 622 that may be associated with given software/hardware operations. Table 1 below summarizes sample thickness and other description of selected elements depicted in Figure 6. It should be noted that the table contents are provided merely to illustrate one exemplary configuration of the embodiment 600, and the invention is not limited to the embodiment 600 nor to this particular configuration.

**Table 1. Components, Component Thicknesses and Descriptions**

| Element | Thickness | Description |
|---|---|---|
| 610 - cover glass | 0.5 mm to 1.1 mm | black print, grind and hole |
| 612 - bonding film | ∼0.2 mm (dry) | |
| | ∼0.3 mm (wet) | |
| 608 - sensor glass | 0.7 mm to 0.5 mm | CS soda-lime or Non-alkali |
| 606 - optical film | 0.1 mm to 0.2 mm | AR, AG (optional) |
| 614 - controller | 2.5 mm maximum | |
| 622 - overlay | 0.5 mm to 1.1 mm | clear film |

Various embodiments of the overlays described above may be configured to be permanently or semi-permanently attached to a corresponding touch sensitive display device, or to be removably attached or associated with a corresponding touch sensitive device.

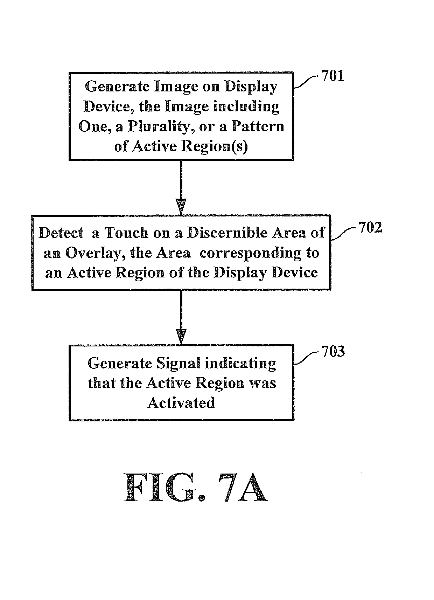

Figure 7A is a flow chart depicting an exemplary process for operating a touch sensitive display device, which is configured according to various exemplary embodiments of the invention as described above. The process is used with the display device that includes an overlay overlaying a portion, portions, or an entire surface of the display device. The overlay includes one visually and/or touch discernible area, a plurality of visually and/or touch discernible areas, or a pattern of visually and/or touch discernible areas, where the discernible area(s) are in correspondence with or registration with one, a plurality, or a pattern of active region(s) of the display device.

The method includes generally three steps. First, in step 701, an image is generated on the display device, where the image includes one, a plurality, or a pattern of active region(s). In step 702, a user's touch on a discernible area of the overlay, which corresponds to or is in registration with an active region of the display device, is detected. In step 703, a signal is generated indicating that the active region, which corresponds to the touched discernible area, was activated. Referring additionally to Figure 1 discussed above, for example, in step 701, an image is generated on the display device 101, on which the overlay 106 is provided. In step 702, a user's touch on a discernible area of the overlay 106, corresponding to an active region of the display device 101, is detected in the detection circuit 108. In step 703, a signal is generated indicating that the active region, which corresponds to the touched discernible area, was activated (e.g., signals CMP, CNT and POS in Figure 1).

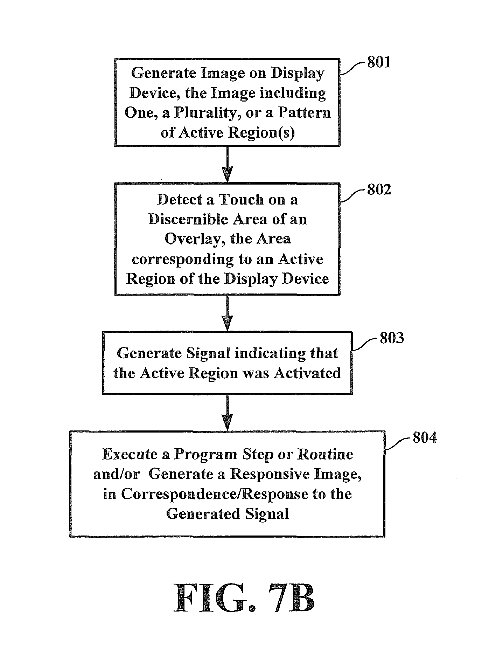

Figure 7B is a flow chart depicting an exemplary process for operating a system including a digital processing unit and a touch sensitive display device in communication with the digital processing unit. Referring additionally to Figure 1, for example, the process may be applied to operate the system 100 including a digital processing unit (e.g., the touch panel control circuit 112, main control circuit 114, display control circuit 116, etc., comprising one or more microprocessors or the like) and the touch sensitive display device 101 in communication with the digital processing unit. The touch sensitive display device 101 is configured according to various exemplary embodiments of the invention as described above, and is capable of displaying a computer generated image having one, a plurality, or a pattern of active region(s). The system 100 further includes an overlay 106 overlaying a portion, portions, or an entire surface of the display device 101. The overlay 106 includes one visually and/or touch discernible area, a plurality of visually and/or touch discernible areas, or a pattern of visually and/or touch discernible areas, where the area(s) are in correspondence with or registration with one, a plurality, or a pattern of active region(s) of the display device 101.

The method includes generally four steps. First, in step 801, a software program is executed in the digital processing unit, to generate an image on the display device 101, where the image includes one, a plurality, or a pattern of active region(s). In step 802, a touch on a discernible area of the overlay 106 is detected, which corresponds to or is in registration with an active region of the display device 101. In step 803, a signal is generated indicating that the active region, which corresponds to the touched discernible area, was activated (e.g., signals CMP, CNT and POS in Figure 1). In step 804, a program step or a routine of the software program is executed in the digital processing unit, which corresponds to the signal generated to indicate that the active region was activated. For example, when the software program is a game program, a program step or a routine in the game program to be triggered by a user's touch on a certain discernible area is executed, such as to provide a haptic feedback, audio feedback, or visual feedback to the user's touch. Alternatively or additionally, in step 804, a responsive image is generated on the display device 101, where the responsive image corresponds to the signal generated to indicate that the active region was activated. For example, in response to the signal, the digital processing unit may change one or more display attributes of a portion or the entire surface of the display device 101, including the portion associated with the activated region. Again using a game program as an example, in response to the signal indicating that a certain active region was activated based on a user's touch on its corresponding discernible area, the digital processing unit may change one or more display attributes of an image or images generated on the display device 101, such as to change a game scene, display character attributes, etc.

Still referring to Figure 1, according to a further embodiment of the present invention, a multi-touch detection system 100 is provided, which includes a display device 101, on which a multi-touch manipulation is detectable. Various types of multi-touch detection systems are known in the art and may be applied to realize the present embodiment of the invention. The multi-touch detection system 100 of the embodiment includes the display device 101, which includes a display screen 102 and a multi-touch detection sensor 104 having a transparent property and overlaid on the display screen 102. The multi-touch detection system 100 also includes an overlay 106 having button configurations, such as the areas 306, 326, 346, and 368 as shown in Figures 3A-3D; for example. The overlay 106 is overlaid on the multi-touch detection sensor 104, where the button configurations are in correspondence with or registration with at least some of the active regions of the multi-touch detection sensor 104.

The multi-touch detection system 100 also includes a touch detection determination device (e.g., the detection circuit 108, the ADC 110, the touch panel control circuit 112, main control circuit 114, etc., comprising one or more microprocessors or the like). The touch detection determination device is configured to determine a detected touch as acceptable if the detected touch is based on an active region in correspondence or registration with one of the button configurations. On the other hand, the touch detection determination device is configured to determine a detected touch as not acceptable if the detected touch is based on an active region that is not in correspondence or registration with one of the button configurations. This embodiment is advantageous in adaptively tailoring the responsiveness or sensibility of the display device 101 based on a particular one or more of overlay(s) provided thereon. For example, when an overlay 106 including various button configurations is provided, where the button configurations cover only one half of the surface of a display device 101, then only those touches on that half of the surface are acted upon while touches on the other half of the surface are ignored.

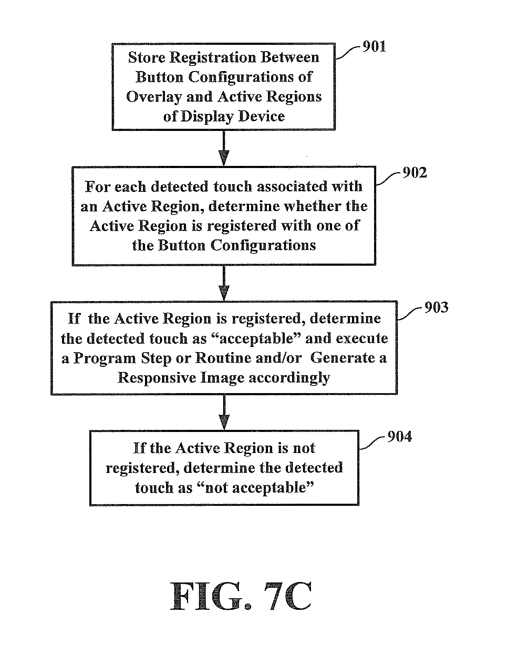

Figure 7C is a flow chart depicting an exemplary process of determining a touch as either acceptable or not acceptable, according to one embodiment of the present invention. In Step 901, registration between the button configurations of the overlay 106 and the active regions of the display device 101 is stored in a manner accessible to the touch detection determination device. This may be achieved automatically, semi-automatically, or manually in connection with the provision of the overlay 106 over the display device 101. In step 902, each time a touch is detected in association with an active region of the display device 101, the touch detection determining device determines whether the active region is registered with one of the button configurations, in reference to the registration information stored in step 901 above. In step 903, when it is determined that the active region is registered, then the detected touch is determined to be an acceptable touch, and a program step or a routine to be triggered by the acceptable touch is thereby executed. Additionally or alternatively, a responsive image corresponding to the acceptable touch may be generated on the display device 101. On the other hand, in step 904, when it is determined that the active region is not registered, then the detected touch is determined to be not acceptable, and no program step or routine to be triggered by an acceptable touch is executed.

Although the invention has been disclosed with reference to its preferred embodiments, from reading this description those of skill in the art will appreciate changes and modification that may be made which do not depart from the scope and spirit of the invention as described above and claimed hereafter.

## Claims

1. An overlay for a touch sensitive display device, the device including at least one active region, the overlay comprising:
one visually and/or touch discernible area, a plurality of visually and/or touch discernible areas, or a pattern of visually and/or touch discernible areas, where at least one visually and/or touch discernible area of the overlay is configured to be in registration with said at least one active region of the touch sensitive display device.

2. The overlay of claim 1, wherein the visually and/or touch discernible area comprises a raised area, a recessed area, or a compound area including both a raised portion and a recessed portion.

3. The overlay of claim 1 or 2, which includes a plurality of patterns of visually and/or touch discernible areas, where at least two of the plurality of patterns are different from each other.

4. A touch sensitive display device including an overlay according to one of the claims 1 to 3 overlaying a portion, portions, or an entire surface of the display device, where the visually and/or touch discernible area(s) are in registration with one, a plurality, or a pattern of active region(s) of the display device.

5. The touch sensitive display device of claim 4, wherein the visually and/or touch discernible areas are larger or smaller than the corresponding active regions of the display device.

6. The touch sensitive display device of claim 4, wherein the visually and/or touch discernible areas are coextensive with the corresponding active regions of the display device.

7. The touch sensitive display device of claim 4 or 5, wherein at least one of the visually and/or touch discernible areas is shaped/sized differently from its corresponding active region.

8. A system comprising:
a digital processing unit,
a touch sensitive display device according to one of the claims 4 to 7 in communication with the digital processing unit, where the display device is capable of displaying a computer generated image on the display device having one, a plurality, or a pattern of active region(s).

9. A method for making an overlay for a touch sensitive display device, where the overlay includes one visually and/or touch discernible area, a plurality of visually and/or touch discernible areas, or a pattern of visually and/or touch discernible areas, the method comprising:
fabricating the overlay from transparent or translucent material, where a fabrication method is selected from a group consisting of compression forming, blow molding, molding followed by etching, molding followed by a pattern disposition, and molding followed by a pattern disposition and etching.

10. The method of claim 9, wherein the transparent or translucent material is selected from a group consisting of glass, sapphire, diamond, ruby, polycarbonates, polyolefins, polyesters, and mixtures and combinations thereof.

11. A method for operating a touch sensitive display device according to one of the claims 4 to 7, the method comprising:
generating an image on the display device, where the image includes one, a plurality, or a pattern of active region(s),
detecting a touch on a visually and/or touch discernible area of the overlay corresponding to an active region of the display device,
generating a signal indicating that the active region was activated.

12. A method for operating a system including a digital processing unit and a touch sensitive display device according to one of the claims 4 to 7 in communication with the digital processing unit, the display device being capable of displaying a computer generated image having one, a plurality, or a pattern of active region(s), the method comprising:
executing a software program in the digital processing unit, which generates an image on the display device, where the image includes one, a plurality, or a pattern of active region(s),
detecting a touch on a visually and/or touch discernible area of the overlay corresponding to an active region of the display device, and
generating a signal indicating that the active region was activated.

13. The method of claim 12, further comprising executing a program routine corresponding to the signal generated to indicate that the active region was activated.

14. The method of claim 12 or 13, further comprising generating a responsive image on the display device, the responsive image corresponding to the signal generated to indicate that the active region was activated.

15. A multi-touch detection system having a display device, on which a multi-touch manipulation is detectable, the multi-touch detection system comprising:
a display device, especially according to one of the claims 4 to 7, which includes a display screen and a multi-touch detection sensor having a transparent property and overlaid on the display screen,
an overlay having button configurations and being overlaid on the multi-touch detection sensor, where the button configurations are in registration with at least some active regions of the multi-touch detection sensor, and
a touch detection determination device, which is configured to determine a touch detected in the active regions in correspondence with or registration with the button configurations as an acceptable touch, while determining a touch detected in other active regions that are not in correspondence with or registration with the button configurations as an unacceptable touch.
